# EUROPÄISCHE PATENTSCHRIFT

(11) **EP 3 656 548 B1**
(45) Veröffentlichungstag und Bekanntmachung des Hinweises auf die Patenterteilung: **08.01.2025**
(21) Anmeldenummer: 19209172.6
(22) Anmeldetag: 14.11.2019
(51) Int. Cl.: B29C 70/08, B29D 99/00, B29C 70/46, B29C 70/86, B62D 33/04, B29C 37/00, B32B 3/08, B32B 3/26, B32B 5/18, B32B 27/06

(54) **ISOLIERPANEEL, KOMPONENTE EINES FAHRZEUGAUFBAUS, FAHRZEUGAUFBAU, FAHRZEUG UND HERSTELLUNGSVERFAHREN**
INSULATING PANEL, COMPONENT OF VEHICLE BODY, VEHICLE BODY, VEHICLE AND PRODUCTION METHOD
PANNEAU ISOLANT, COMPOSANT D'UNE CAISSE DE VÉHICULE, CAISSE DE VÉHICULE, VÉHICULE ET PROCÉDÉ DE FABRICATION

(30) Priorität: 23.11.2018 DE 102018129602
(43) Veröffentlichungstag der Anmeldung: 27.05.2020
(60) Teilanmeldung: 23160392.9
(73) Patentinhaber: Kögel Trailer GmbH, 89349 Burtenbach (DE)
(72) Erfinder: PRÖBSTLE, Roman, 89359 Kötz (DE); RULEWSKI, Marcel, 86637 Zusamaltheim (DE); GRINBOLD, Matthias, 74541 Vellberg (DE); BIRLE, Günter, 86877 Walkertshofen (DE)
(74) Vertreter: Meissner Bolte Partnerschaft mbB

(56) Entgegenhaltungen:
- EP-B1- 0 958 995
- WO-A1-94/04350
- GB-A- 1 177 582

## Beschreibung

Die Erfindung betrifft ein Isolierpaneel mit den Merkmalen des Anspruchs 1. Die Erfindung betrifft ferner eine Komponente eines Fahrzeugaufbaus, einen Fahrzeugaufbau, ein Fahrzeug und ein Verfahren zur Herstellung eines Isolierpaneels.

Im Nutzfahrzeugbau werden üblicherweise Metalldeckplatten zur Herstellung von Isolierpaneelen verwendet, die parallel und mit einem Zwischenraum angeordnet werden. In den Zwischenraum wird eine Flüssigkeit eingebracht und zur Bildung einer Dämmschicht aufgeschäumt. Die Herstellung geschäumter Isolierpaneele ist aufwendig und kostenintensiv, da der Schaum die im Zwischenraum enthaltene Luft verdrängen und diesen ausfüllen muss. Überdies bestehen Einschränkungen hinsichtlich der Form und Größe der so gefertigten Isolierpaneele. Eine weitere Möglichkeit zur Herstellung von Isolierpaneelen sind geklebte Paneele, bei denen vorgefertigte Dämmschichten und Decklagen verklebt werden. Auch hier unterliegen die Form und Größe der Isolierpaneele Einschränkungen.

Ein Isolierpaneel der eingangs genannten Art mit Deckschichten aus faserverstärkten Kunststoffmaterialien ist beispielsweise aus WO 99/50060 A1 bekannt, die auf die Anmelderin zurückgeht. Derartige Isolierpaneele können durch ein Nass-in-Nass-Verfahren hergestellt werden, bei dem Glasfasermatten mit Harz getränkt und ausgehärtet werden. Dieses Verfahren ist aufwendig und hat Nachteile hinsichtlich der Automatisierbarkeit. Die Herstellung von Isolierpaneelen mit Deckschichten aus faserverstärkten Kunststoffmaterialien wird durch Anwendung des sogenannten SMC-Verfahrens verbessert, bei dem eine fließfähige Harzmatte mit isotropen Eigenschaften und Wirrfaserverteilung in der Mattenebene verwendet wird. Das SMC-Verfahren ermöglicht eine automatisierte Fertigung der Isolierpaneele.

Ein Beispiel für den Einsatz von Isolierpaneelen in Kühlfahrzeugen ist in DE 10 2013 105 819 A1 gezeigt, die ebenfalls auf die Anmelderin zurückgeht. Derartige Nutzfahrzeuge umfassen üblicherweise Einbauten, wie beispielsweise Schienenelemente, die zur Ladungssicherung oder für die Doppelstock-Beladung genutzt werden. Die Verbindung dieser Einbauten mit Isolierpaneelen ist problematisch, weil die Einbauten einerseits mechanisch fest mit den Isolierpaneelen verbunden werden müssen und andererseits die thermischen Eigenschaften der Isolierpaneele möglichst wenig beeinträchtigen sollen. Außerdem wird die automatisierte Fertigung der Isolierpaneele erschwert.

Der Erfindung liegt die Aufgabe zugrunde, ein Isolierpaneel für einen Fahrzeugaufbau, insbesondere Kühlfahrzeugaufbau anzugeben, das einfach hergestellt werden kann und einen guten Automatisierungsgrad ermöglicht. Der Erfindung liegt ferner die Aufgabe zugrunde, eine Komponente eines Fahrzeugaufbaus, einen Fahrzeugaufbau, ein Fahrzeug und ein Herstellungsverfahren für Isolierpaneele anzugeben.

Erfindungsgemäß wird die Aufgabe hinsichtlich des Isolierpaneels durch den Gegenstand des Anspruchs 1 gelöst. Mit Blick auf die Komponente eines Fahrzeugaufbaus wird die Aufgabe durch den Gegenstand des nebengeordneten Anspruchs 9, mit Blick auf den Fahrzeugaufbau durch den Gegenstand des nebengeordneten Anspruchs 10, mit Blick auf das Fahrzeug durch den Gegenstand des nebengeordneten Anspruchs 11 und mit Blick auf das Verfahren zur Herstellung eines Isolierpaneels durch den Gegenstand des nebengeordneten Anspruchs 12 gelöst.

Konkret wird die Aufgabe durch ein Isolierpaneel für einen Fahrzeugaufbau, insbesondere Kühlfahrzeugaufbau, mit wenigstens einer wärmedämmenden Kernschicht und wenigstens einer Deckschicht aus einem faserverstärkten Kunststoffmaterial gelöst. Die Kernschicht weist wenigstens eine Ausnehmung auf, die zumindest bereichsweise durch die Deckschicht ausgefüllt ist, sodass die Deckschicht im Bereich der Ausnehmung eine erhöhte Schichtdicke aufweist.

Die Erfindung hat verschiedene Vorteile.

So kann die Ausnehmung bereichsweise durch die Deckschicht ausgefüllt sein. Mit anderen Worten ist wenigstens ein Bereich der Ausnehmung mit der Deckschicht ausgefüllt und mindestens ein weiterer Bereich der Ausnehmung nicht mit der Deckschicht ausgefüllt. Dasselbe gilt für mehrere Einzelbereiche der Ausnehmung. Die Ausnehmung ist also nur teilweise mit der Deckschicht ausgefüllt. In dem oder den nicht von der Deckschicht ausgefüllten Bereich/Bereichen der Ausnehmung kann ein Einbauelement des Fahrzeugaufbaus angeordnet sein, das in die Deckschicht eingebettet ist. Die Deckschicht weist in der Ausnehmung bereichsweise eine erhöhte Schichtdicke auf, die das Einbauelement zumindest abschnittsweise oder vollständig umgibt. Das Einbauelement ist somit in die Deckschicht integriert. Dadurch wird das Einbauelement mechanisch mit der Deckschicht verbunden.

Im Unterschied zum Stand der Technik wird das Einbauelement nicht auf die vor der Montage freiliegende Oberseite der Deckschicht aufgesetzt und mit dieser verbunden. Vielmehr wird das Einbauelement unmittelbar in die Deckschicht integriert bzw. eingebettet, die das Einbauelement umgibt und direkt am Einbauelement anliegt. Da die Deckschicht aus einem faserverstärkten Kunststoffmaterial besteht, wird durch die Integration des Einbauelements in die Deckschicht ein mechanisch stabiler Verbund geschaffen, der die in das Einbauelement eingeleiteten Kräfte optimal in die Deckschicht ableitet. Dabei bestehen praktisch keine Einschränkungen hinsichtlich der Geometrie des Einbauelements, insbesondere hinsichtlich der Außenkontur, weil sich durch die teilweise Ausfüllung der Ausnehmung mit der Deckschicht diese an die Außenkontur des Einbauelements anpasst.

Es können auch mehrere Einbauelemente in einer einzigen Ausnehmung auf die vorstehend beschriebene Weise angeordnet und eingebettet sein.

Alternativ kann die Ausnehmung durch die Deckschicht vollständig ausgefüllt sein, so dass Bereiche mit erhöhter Stabilität geschaffen werden, die beispielsweise dazu genutzt werden können, um Anbauteile am Isolierpaneel zu befestigen.

In beiden Fällen (vollständig ausgefüllte oder teilweise ausgefüllte Ausnehmung) geht die Deckschicht kontinuierlich, d. h. monolithisch vom Bereich der Ausnehmung in die Bereiche außerhalb der Ausnehmung, also in die unmittelbar an die Ausnehmung angrenzenden Bereiche des Isolierpaneels über.

Außerdem hat das erfindungsgemäße Isolierpaneel den Vorteil, dass Einbauteile und/oder Anbauteile mit dem Isolierpaneel in einem automatisierten Fertigungsprozess verbunden werden können.

Zur Herstellung derartiger Isolierpaneele wird auf das in dieser Anmeldung beschriebene und im Anspruch 12 beanspruchte Herstellungsverfahren verwiesen. Im Unterschied zu den vorstehend genannten, bekannten Verfahren wird der Deckschicht aus dem faserverstärkten Kunststoffmaterial auf die Kernschicht aufgesprüht und dann mit dieser verpresst. Dieses Verfahren ermöglicht die lokale Einstellung unterschiedlicher Schichtdicken der Deckschicht. Dazu wird im Bereich der Ausnehmung, die in der Kernschicht ausgebildet ist, eine größere Materialmenge aufgesprüht als im angrenzenden Bereich der Ausnehmung, wo eine im Vergleich zur Ausnehmung geringere Schichtdicke gewünscht ist.

Das Herstellungsverfahren ist damit sehr flexibel und für praktisch jede Art von Einbauelement, zumindest jedoch für die im Nutzfahrzeugbau üblichen Einbauelemente, wie Etagenschienen oder Scharnierelemente für Hecktüren oder andere Einbauelemente geeignet. Das Herstellungsverfahren ermöglicht außerdem die Ausbildung von Stabilisationselementen im Isolierpaneel, wie an anderer Stelle im Einzelnen beschrieben.

Die Erfindung schlägt ein Isolierpaneel vor, das vorteilhafterweise wenigstens einen lokalen Funktionsbereich aufweist. Der Funktionsbereich zeichnet sich dadurch aus, dass die wärmedämmende Kernschicht und die Deckschicht entsprechend profiliert sind, wobei die Kernschicht eine Ausnehmung und die Deckschicht eine entsprechend gegenprofilierte Innenseite aufweist, die durch die erhöhte Schichtdicke der Deckschicht im Bereich der Ausnehmung erreicht wird. Der lokale, d.h. geometrisch auf einen Teilbereich des Isolierpaneels beschränkte Funktionsbereich ermöglicht zusätzlich zur wärmedämmenden Funktion des Isolierpaneels weitere, insbesondere mechanische Funktionen. Die mechanischen Funktionen können beispielsweise die Stabilität des Isolierpaneels oder die Verbindung von Einbauten oder Anbauteilen verbessern.

Das erfindungsgemäße Verfahren zur Herstellung des vorstehend beschriebenen Isolierpaneels umfasst folgende Schritte. Zunächst wird eine Kernschicht aus wenigstens einem wärmedämmenden, insbesondere geschäumten, Material bereitgestellt, wobei die Kernschicht wenigstens eine Ausnehmung aufweist. Die Kernschicht samt Ausnehmung wird mit einem faserverstärkten, insbesondere glasfaserverstärkten Kunststoffmaterial besprüht, sodass eine Deckschicht auf der Kernschicht einschließlich der Ausnehmung gebildet wird. Die Kernschicht wird mit der Deckschicht zum Ausfüllen der Ausnehmung mit dem faserverstärkten Kunststoffmaterial und zur Bildung einer ebenen bzw. glatten Außenseite der Deckschicht verpresst.

Das erfindungsgemäße Verfahren hat den Vorteil, dass die Herstellungszeiten verkürzt werden. Das Aufsprühen der Deckschicht auf die Kernschicht kann ähnlich wie das Lackieren von Karosserieteilen im Automobilbau robotergestützt erfolgen. Die Herstellung der Isolierpaneele ist daher gut automatisierbar. Das erfindungsgemäße Verfahren ist flexibel, da das Aufsprühen des faserverstärkten Kunststoffmaterials die Herstellung von Isolierpaneelen mit komplexen Geometrien ermöglicht. Beispielsweise können Verstärkungen, Rippen, Verbindungseinrichtungen, Einformungen, Einlagen und dergleichen durch das aufgesprühte Kunststoffmaterial im Zusammenhang mit einer entsprechend profilierten Kernschicht hergestellt werden. Das Verfahren erlaubt die Ausbildung unterschiedlicher Bereiche in ein und demselben Isolierpaneel, sodass die vorstehend genannten lokalen Funktionsbereiche bzw. wenigstens ein lokaler Funktionsbereich mit geringem Aufwand gefertigt werden können.

Die Isolierpaneele können sehr präzise gefertigt werden. Es hat sich überdies gezeigt, dass die Verbindung zwischen der Deckschicht und der Kernschicht sehr gut ist. Außerdem sind die erfindungsgemäß hergestellten Isolierpaneele leichter als bekannte Paneele mit Metalldeckschichten. Dieser Vorteil spielt gerade im Nutzfahrzeugbau eine große Rolle. Die mit dem erfindungsgemäßen Verfahren hergestellten Isolierpaneele sind robust, schlagzäh und weisen eine hohe Festigkeit auf, sodass beispielsweise Hagelschäden vermieden oder zumindest verringert werden.

Im Vergleich zu den bekannten Herstellungsverfahren ist das erfindungsgemäße Herstellungsverfahren kostengünstig sowohl mit Blick auf den Herstellungsprozess als auch mit Blick auf die Materialkosten. Die faserverstärkten Kunststoffmaterialien, die im Rahmen des erfindungsgemäßen Verfahrens zum Einsatz kommen, ermöglichen eine geringe Längenausdehnung bei Temperaturunterschieden, was insbesondere beim Kühlfahrzeugaufbau war besonders vorteilhaft ist. Die Kunststoffmaterialien sind korrosionsbeständig, einfärbbar, elektrisch nichtleitend, säure- und laugenbeständig und mechanisch gute bearbeitbar. Außerdem weisen die erfindungsgemäß hergestellten Isolierpaneelen ein geringes Gewicht auf und sind als solche schwimmfähig.

Sowohl das erfindungsgemäße Isolierpaneel als auch das erfindungsgemäße Herstellungsverfahren umfassen die mögliche Ausführungsform einer Kernschicht mit einer einzigen Deckschicht aus einem aufgesprühten und verpressten faserverstärkten Kunststoffmaterial. Besonders bevorzugt sind Isolierpaneele bzw. Herstellungsverfahren, bei denen wenigstens zwei parallele Deckschichten aus faserverstärkten Kunststoffmaterialien zur Bildung einer Sandwichstruktur auf die Kernschicht aufgesprüht und verpresst sind. Die parallelen Deckschichten bilden die Innenseite bzw. Außenseite des Isolierpaneels, die bei einem Fahrzeug, insbesondere Kühlfahrzeug einerseits den Ladeinnenraum begrenzt und andererseits die Außenwand des Fahrzeugs bildet. Besonders bevorzugt sind Isolierpaneele bzw. Herstellungsverfahren, bei denen die Kernschicht allseitig von dem faserverstärkten Kunststoffmaterial umgeben ist, sodass die Deckschichten die Kernschicht vollständig einkapseln.

Bei einer alternativen Variante des Herstellungsverfahrens ist denkbar, dass vor oder nach dem Bereitstellen der Kernschicht eine erste Gegenseite, insbesondere eine unten angeordnete Gegenseite, einer Presse mit einem Trennmittel besprüht wird. Danach wird hierbei die erste Gegenseite der Presse mit dem faserverstärkten Kunststoffmaterial zur Bildung einer ersten Deckschicht besprüht. Anschließend wird die Kernschicht mit einer ersten Seite, insbesondere einer Unterseite, auf das aufgesprühte faserverstärkte Kunststoffmaterial der ersten Gegenseite der Presse aufgelegt.

In einem weiteren Schritt dieser Variante wird eine zweite Seite, insbesondere eine Oberseite, der aufgelegten Kernschicht mit dem faserverstärkten Kunststoffmaterial zur Bildung einer zweiten Deckschicht besprüht. Ferner wird eine zweite Gegenseite, insbesondere eine oben angeordnete Gegenseite, der Presse mit einem Trennmittel besprüht. Das Besprühen der zweiten Gegenseite mit dem Trennmittel kann zeitlich unabhängig von den anderen genannten Verfahrensschritten erfolgen. Anschließend wird die Kernschicht durch die Presse mit den Deckschichten verpresst. Beim Verpressen kann dabei eine ebene bzw. glatte Außenoberfläche der Deckschicht ausgebildet werden.

Bevorzugte Ausführungsformen des erfindungsgemäßen Isolierpaneels bzw. des erfindungsgemäßen Herstellungsverfahrens sind in den Unteransprüchen angegeben.

Bei dem erfindungsgemäßen Isolierpaneel kann vorzugsweise die Deckschicht eine Außenseite aufweisen, die zumindest im Bereich der Ausnehmung eben bzw. glatt ausgebildet ist. Damit ist es möglich, über die gesamte Fläche der Isolierpaneele, also auch im Bereich der Ausnehmung eine ebene bzw. glatte Struktur zu schaffen. Bei diesem Ausführungsbeispiel werden Bereiche der Deckschicht gebildet, die unterschiedlich stark sind, gleichzeitig aber insgesamt eine ebene und gleichmäßige Sichtfläche ausbilden. Dazu findet die Profilierung im Inneren des Isolierpaneels statt und zwar durch die erfindungsgemäß in der Kernschicht ausgebildete Ausnehmung bzw. Ausnehmungen. In den Bereichen des Isolierpaneels, in denen eine erhöhte Schichtdicke vorliegen soll wird die Kernschicht abgetragen, beispielsweise ausgefräst. Angrenzend zur der Ausnehmung bzw. zu den Ausnehmungen ist die Kernschicht erhaben, sodass dort eine Deckschicht mit geringere Schichtdicke ausgebildet ist als im Bereich der Ausnehmung. Durch die Ebene bzw. glatte Deckschicht zumindest im Bereich der Ausnehmung, wird eine ebene Sichtfläche gebildet. Die ebene Sichtfläche kann das gesamte Isolierpaneel ausbilden. In die verstärkten Stellen des Isolierpaneels sind nach innen, ins Innere des Isolierpaneels gerichtet.

Die Außenseite der Deckschicht ist dabei die von der Kernschicht abgewandte Seite der Deckschicht. Die Außenseite der Deckschicht kann also sowohl die Innenseite des Isolierpaneels als auch die Außenseite des Isolierpaneels bilden. Die Innenseite des Isolierpaneels begrenzt bei einem Kühlfahrzeugaufbau das Innenvolumen des Laderaums, also den Ladeinnenraum. Die Außenseite des Isolierpaneels bildet die von außen sichtbare Wand bzw. Außenbegrenzung des Aufbaus.

Vorzugsweise weist die Deckschicht außerhalb der Ausnehmung zumindest abschnittsweise eine einheitliche Schichtdicke auf. Damit wird eine gleichmäßige Sandwichstruktur des Isolierpaneels gebildet, die im Bereich der Ausnehmung gezielt durch die erhöhte Schichtdicke verändert wird. Die Deckschicht geht kontinuierlich, d. h. monolithisch vom Bereich der Ausnehmung in die Bereiche außerhalb der Ausnehmung über.

Bei einer weiteren Ausführungsform ist die Ausnehmung nutartig ausgebildet. Die Deckschicht bildet wenigstens eine Verstärkungsrippe, die in die nutartige Ausnehmung der Kernschicht formschlüssig eingreift. Diese Ausführungsform hat den Vorteil, dass die Stabilität des Verbundes aus Deckschicht und Kernschicht im Bereich der Ausnehmung verbessert wird. Dabei kann sich die Verstärkungsrippe und die nutartige Ausnehmung im Wesentlichen senkrecht zur Außenfläche der Deckschicht erstrecken, wodurch eine besonders gute Stabilität erreicht wird.

Bei einer besonders bevorzugten Ausführungsform der Erfindung ist in der Ausnehmung wenigstens ein Einlageelement angeordnet. Dies hat den Vorteil, dass das Einlageelement in die Deckschicht integriert werden kann.

Dazu kann beispielsweise vorgesehen sein, dass zwischen dem Einlageelement und einem Rand der Ausnehmung ein Spalt ausgebildet ist, der mit dem faserverstärktem Kunststoffmaterial der Deckschicht ausgefüllt ist. Das Kunststoffmaterial der Deckschicht im Spalt ist mit der Deckschicht stoffschlüssig verbunden. Das Einlageelement und die Deckschicht bilden somit einen fest miteinander verbundenen Körper, der in der Ausnehmung der Kernschicht angeordnet ist. Die mechanische Verbindung zwischen dem Einlageelement und dem Isolierpaneel wird dadurch verbessert.

Zusätzlich oder alternativ dazu kann das Einlageelement wenigstens eine Aussparung aufweisen, die mit dem Kunststoffmaterial der Deckschicht ausgefüllt ist. Das Kunststoffmaterial der Deckschicht in der Aussparung ist mit der Deckschicht stoffschlüssig derart verbunden, dass die Deckschicht das Einlageelement formschlüssig fixiert. Auch hier wird der Vorteil der guten mechanischen Verbindung des Einlageelements mit dem Isolierpaneel dadurch erreicht, dass das Einlageelement direkt in die Deckschicht integriert bzw. eingebettet ist. Dazu wird die im Einlageelement ausgebildete Aussparung mit dem Kunststoffmaterial der Deckschicht ausgefüllt.

Die Aussparung im Einlageelement ist vorzugsweise durch wenigstens eine Durchgangsöffnung im Einlageelement und/oder durch wenigstens einen randseitigen Absatz im Einlageelement gebildet, wodurch ein besonders guter Formschluss zwischen dem Kunststoffmaterial der Deckschicht bzw. allgemein der Deckschicht und dem Einlageelement erreicht wird.

Das Ausfüllen des Spalts bzw. der Aussparung mit dem Kunststoffmaterial der Deckschicht erfolgt im Rahmen des erfindungsgemäßen Verfahrens durch das Aufsprühen und Verpressen des faserverstärkten Kunststoffmaterials.

Bei einer weiteren bevorzugten Ausführungsform ist das Einlageelement als Verstärkungsplatte zur Befestigung von Anbauteilen an dem Isolierpaneel und/oder zur Erhöhung der Stabilität des Isolierpaneels ausgebildet. Dadurch werden weitere Möglichkeiten geschaffen, die mechanischen Funktionen des Isolierpaneels an die speziellen Anforderungen des Fahrzeugaufbaus bspw. mit Blick auf die Ladungssicherung anzupassen.

Vorzugsweise sind zwischen der Kernschicht und der Deckschicht und/oder in der Deckschicht Alarmdrähte angeordnet. Diese Ausführungsform ist ein Beispiel dafür, wie die Funktionalität des Isolierpaneels erweitert werden kann, ohne dass dafür bei der Herstellung besonders aufwendige Maßnahmen getroffen werden müssen.

Auf der Deckschicht, insbesondere auf der Außenseite der Deckschicht kann eine Außenlage aufgebracht sein, die eine Sichtfläche bildet. Die Deckschicht aus dem faserverstärkten Kunststoffmaterial muss nicht zwingend die Endschicht des Sandwichaufbaus sein. Es ist möglich, dass die Deckschicht mit wenigstens einer weiteren Schicht bzw. Außenlage verbunden ist. Die Außenlage kann beispielsweise durch eine Folie oder eine Beschichtung oder eine Lackierung gebildet sein.

Vorzugsweise ist die Kernschicht durch ein Schaumstoffmaterial gebildet. Hierfür sind übliche wärmedämmende Schaumstoffmaterialien geeignet.

Die Kernschicht kann aus mehreren wärmedämmende Kernschichtelementen zusammengestellt sein, wobei die Kernschichtelemente gleichartige oder voneinander verschiedene Wärmeisolationseigenschaften aufweisen. Dadurch kann das Isolierpaneel noch besser an in die jeweiligen Anforderungen des Fahrzeugaufbaus insbesondere mit Blick auf die thermischen Eigenschaften angepasst werden.

Im Rahmen der Erfindung wird eine Komponente eines Fahrzeugaufbaus, insbesondere Kühlfahrzeugaufbaus offenbart und beansprucht, die wenigstens ein erfindungsgemäßes Isolierpaneel aufweist. Besonders bevorzugt ist die gesamte Komponente aus einem oder mehreren erfindungsgemäßen Isolierpaneelen zusammengesetzt. Als Komponente kommen beispielsweise eine Seitenwand, d. h. die in Fahrtrichtung des Fahrzeugaufbaus sich erstreckende Längswand, und/oder eine Vorderwand und/oder eine Decke und/oder ein Boden und/oder eine oder beide Hecktüren des Fahrzeugaufbaus infrage. Die Komponenten des Fahrzeugaufbaus bilden sofern Außenteile des Fahrzeugaufbaus, als diese den Ladeinnenraum von der Umgebung wärmedämmend isolieren.

Im Rahmen der Erfindung wird ferner ein Fahrzeugaufbau, insbesondere Kühlfahrzeugaufbau mit wenigstens einem erfindungsgemäßen Isolierpaneel offenbart und beansprucht. Es ist möglich, dass der Fahrzeugaufbau teilweise oder vollständig aus erfindungsgemäßen Isolierpaneelen aufgebaut ist.

Bei dem Fahrzeug mit einem erfindungsgemäßen Isolierpaneel kann es sich beispielsweise um ein Kühlfahrzeug, insbesondere einen Sattelauflieger, der als Kühlfahrzeug (Kühlauflieger) ausgebildet ist, handeln.

Bei einer bevorzugten Ausführungsform des erfindungsgemäßen Herstellungsverfahrens können die Arbeitsschritte nach Anspruch 12 für mehrere Seitenflächen der Kernschicht wiederholt werden. Dies führt zu einer Erhöhung der Stabilisierung der Isolierpaneele. Dabei können wenigstens zwei gegenüber angeordnete, parallele Seitenflächen der Kernschicht beschichtet und dann verpresst werden. Es ist auch möglich, dass alle Seitenflächen der Kernschicht beschichtet und verpresst werden. Die Kernschicht ist dann vollständig durch die Deckschicht bzw. die Deckschichten eingekapselt.

Bei einer besonders bevorzugten Ausführungsform des erfindungsgemäßen Herstellungsverfahrens wird vor dem Besprühen der Kernschicht wenigstens ein Einlageelement in die Ausnehmung eingelegt. Das Einlageelement weist wenigstens eine Aussparung auf, wobei beim Pressen der Kernschicht mit der Deckschicht das faserverstärkte Kunststoffmaterial die Aussparung ausfüllt. Dadurch wird die vorstehend beschriebene Einbettung des Einlageelements in die Deckschicht erreicht.Die Erfindung wird nachstehend anhand von Ausführungsbeispielen unter Bezug auf die beigefügten schematischen Zeichnungen mit weiteren Einzelheiten näher erläutert.

In diesen zeigen
- Fig. 1: einen Teilschnitt durch ein Isolierpaneel nach einem erfindungsgemäßen Ausführungsbeispiel im Bereich einer Ausnehmung der Kernschicht;
- Fig. 2: einen Querschnitt durch das Isolierpaneel nach Fig. 1, das mit einem Anbauteil verbunden ist;
- Fig. 3: einen Teilschnitt durch ein Isolierpaneel nach einem weiteren erfindungsgemäßen Ausführungsbeispiel im Bereich der Ausnehmung der Kernschicht;
- Fig. 4: einen Querschnitt durch ein Isolierpaneel nach einem weiteren erfindungsgemäßen Ausführungsbeispiel mit einer in der Kernschicht angeordneten Drehstange für den Türverschluss;
- Fig. 5: einen Querschnitt durch ein Isolierpaneel nach einem weiteren erfindungsgemäßen Ausführungsbeispiel mit mehreren Ausnehmungen, die vollständig durch das Kunststoffmaterial der Deckschicht ausgefüllt sind;
- Fig. 6: einen Teilschnitt durch ein Isolierpaneel nach einem weiteren erfindungsgemäßen Ausführungsbeispiel im Bereich einer Eckrunge
- Fig. 7: einen Teilschnitt durch ein Isolierpaneel nach einem weiteren erfindungsgemäßen Ausführungsbeispiel im Bereich einer Ausnehmung mit einer mehrfach profilierten Einlage und Verstärkungselementen;
- Fig. 8: einen Teilschnitt durch ein Isolierpaneel nach einem weiteren erfindungsgemäßen Ausführungsbeispiel im Bereich einer vollständig ausgefüllten Ausnehmung;
- Fig. 9: einen Teilschnitt durch ein Isolierpaneel nach einem weiteren erfindungsgemäßen Ausführungsbeispiel mit nutartigen Ausnehmungen und
- Fig. 10: einen Teilschnitt durch ein Isolierpaneel nach einem weiteren erfindungsgemäßen Ausführungsbeispiel mit stabilisierenden Ausnehmungen.

Das erfindungsgemäße Verfahren zur Herstellung von Isolierpaneelen beruht auf einem vom Fraunhofer-Institut entwickelten Verfahren, dem sogenannten PUR Fibre Composite Spraying (FCS). Dieses Verfahren ist als solches bekannt und wurde in der Vergangenheit zur Herstellung von Kunststoffbauteilen verwendet.

Das Verfahren nach einem erfindungsgemäßen Ausführungsbeispiel umfasst mindestens zwei Schritte. Im ersten Schritt wird das faserverstärkte Kunststoffmaterial auf eine Kernschicht 10 aufgesprüht. Im zweiten Schritt werden das faserverstärkte Kunststoffmaterial und die Kernschicht 10 zur Bildung eines Verbunds aus einer Deckschicht 11 oder Decklage aus einem faserverstärkten Kunststoffmaterial und der Kernschicht 10 verpresst. Die Deckschicht 11 bzw. die Deckschichten 11 werden auf die Kernschicht 10 aufgesprüht und mit einer Presse glatt gepresst. Durch das Aufsprühen und Glattpressen ergeben sich neue Möglichkeiten der Herstellung von Isolierpaneelen.

Das Isolierpaneel ist bspw. eine Wärmedämmplatte, die bevorzugt im Kühlfahrzeugbau zur Herstellung eines Fahrzeugaufbaus angepasst ist. Andere Anwendungen sind möglich.

Als Kernschicht 10 wird eine profilierte, plattenförmige Kernschicht verwendet, die für die gewünschte Funktionalität lokal wenigstens eine, insbesondere mehrere Ausnehmungen 13 aufweist. In die Ausnehmungen 13 bilden Vertiefungen in der Kernschicht, die beispielsweise durch Materialabtrag, wie etwa Fräsen, oder anderweitig hergestellt sind. Die Form der Ausnehmungen 13 wird anhand von Ausführungsbeispielen der verschiedenen Isolierpaneele näher beschrieben. Im Rahmen der Erfindung wird die Ausnehmung 13 zumindest bereichsweise durch die Deckschicht 11 ausgefüllt, sodass die Deckschicht 11 im Bereich der Ausnehmung 13 eine erhöhte Schichtdicke aufweist. Die Deckschicht 11 wird also nach innen bezogen auf das Isolierpaneel lokal verstärkt. Dadurch können Kräfte optimal in das Isolierpaneel eingeleitet und abgeleitet werden.

Die Deckschicht 11 kann einseitig, doppelseitig bzw. auf mehreren Seiten der Kernschicht 10 ausgebildet sein. Die Deckschicht 11 kann die Kernschicht 10 vollständig ummanteln bzw. einkapseln.

Die Kernschicht 10 kann in einem Vormontageschritt für das Aufsprühen vorbereitet werden. Dabei kann beispielsweise die Kernschicht 10 mit einer textilen Verstärkungsschicht verbunden werden. Die textile Verstärkungsschicht kann beispielsweise auf beiden Seiten der Kernschicht angeordnet sein. Die textile Verstärkungsschicht legt sich an die Profilierung der Kernschicht 10, insbesondere die wenigstens eine Ausnehmung 13 an und bildet somit diese Profilierung ab.

Die Deckschicht 11 kann also entweder direkt auf die Kernschicht 10, d. h. ohne Zwischenschicht, oder mit einer Zwischenschicht, beispielsweise mit textiler Verstärkungsschicht aufgesprüht werden. Diese Ausführung wird sowohl im Zusammenhang mit dem Verfahren als auch im Zusammenhang mit dem erfindungsgemäßen Isolierpaneel bzw. den Ausführungsbeispielen des erfindungsgemäßen Isolierpaneels offenbart und beansprucht.

Beim Aufsprühen des faserverstärkten Kunststoffmaterials werden einerseits flüssiges Kunststoffmaterial, beispielsweise Polyurethan, und andererseits geschnittene Fasern, beispielweise geschnittene Glasfasern, einem Mehrkomponenten-Sprühkopf zugeführt. Andere Materialien sind möglich. Ein Beispiel für einen Mehrkomponenten-Sprühkopf, der für das erfindungsgemäße und das in den nachstehenden Ausführungsbeispielen eingesetzte Verfahren geeignet ist, ist beispielsweise in WO 2010/100045 A1 beschrieben.

Diese Mehrkomponenten-Sprühkopf weist eine Venturidüse auf, die im Betrieb die geschnittenen Glasfasern ansaugt und dem flüssigen Kunststoffmaterial im Sprühkopf zuführt. Dies erfolgt durch ein Y-Rohr, das dazu dient, die Fasern einem Sprühstrahl aus flüssigem Kunststoffmaterial möglichst koaxial zuzuführen. Dadurch kommt es zu einer Vermischung der Fasern mit dem flüssigen Kunststoffmaterial, dass aus dem Sprühkopf austritt und auf ein Substrat, konkret auf die Kernschicht des herzustellenden Isolierpaneels aufgesprüht wird. Zu weiteren Einzelheiten des Mehrkomponenten-Sprühkopfs wird auf die vorstehend genannte WO 2010/100045 A1 verwiesen.

Andere Sprühköpfe sind möglich.

Die Vorrichtung zur Durchführung dieses Verfahrens umfasst ein Kunststoff-Hochdrucksystem, insbesondere Polyurethan-Hochdrucksystem mit einer Dosiereinrichtung, die mit dem Mehrkomponenten-Sprühkopf verbunden ist. Der Mehrkomponenten-Sprühkopf ist ferner mit einem Schneidwerk verbunden, dem Glasrovings zugeführt werden. Die Fasern werden im Schneidwerk auf die gewünschte Länge geschnitten. Das Schneidwerk und der Mehrkomponenten-Sprühkopf sind auf einen Roboterarm montiert, sodass eine automatisierte Beschichtung bzw. automatisiertes Aufsprühen des faserverstärkten Kunststoffmaterials auf die Kernschicht möglich ist. Durch Steuerung können in an sich bekannter Weise die verschiedenen Prozessparameter wie beispielsweise die Menge des Kunststoffmaterials, die Vorschubgeschwindigkeit des Mehrkomponenten-Sprühkopfs, der Spurabstand usw. eingestellt werden.

Außerdem umfasst die Vorrichtung zur Durchführung des Verfahrens eine Presse, die dazu geeignet ist, Isolierpaneele der gewünschten Größe zu verarbeiten. Die Presse weist eine Form auf, in die der Verbund aus aufgesprühtem faserverstärkten Kunststoffmaterial und Kernschicht angeordnet wird. Durch Schließen der Form wird das darin angeordnete Kunststoffmaterial mit der Kernschicht verpresst bzw. an diese angepresst.

Die Erfindung ist nicht auf die vorstehend beschriebene Vorrichtung beschränkt.

Nachstehend werden verschiedene Ausführungsbeispiele anhand der beigefügten Zeichnungen näher erläutert, die auf der Basis des vorstehend beschriebenen Verfahrens hergestellt sind bzw. herstellbar sind.

Das Isolierpaneel ist im wesentlichen plattenförmig ausgebildet und weist dementsprechend zwei Hauptflächen auf, die voneinander beabstandet und im Wesentlichen parallel zueinander angeordnet sind. Zwischen den Hauptflächen sind die Kantenflächen des Isolierpaneels ausgebildet, die dieses auf dem Umfang umgeben. Die Hauptflächen sind jeweils größer als die Kantenflächen. Das Isolierpaneel kann quaderförmig ausgebildet sein, wobei die Hauptflächen eben und parallel zueinander angeordnet sind. Andere Geometrien des Isolierpaneels sind möglich. Das Isolierpaneel muss nicht zwingend quaderförmig ausgebildet sein, sondern kann an die Anforderungen beispielsweise des Kühlfahrzeugbaus angepasst sein.

Das Isolierpaneel dient in erster Linie als wärmedämmendes Wandelement und/oder als wärmedämmendes Bodenelement und/oder als wärmedämmendes Deckenelement und/oder als wärmedämmendes Türelement.

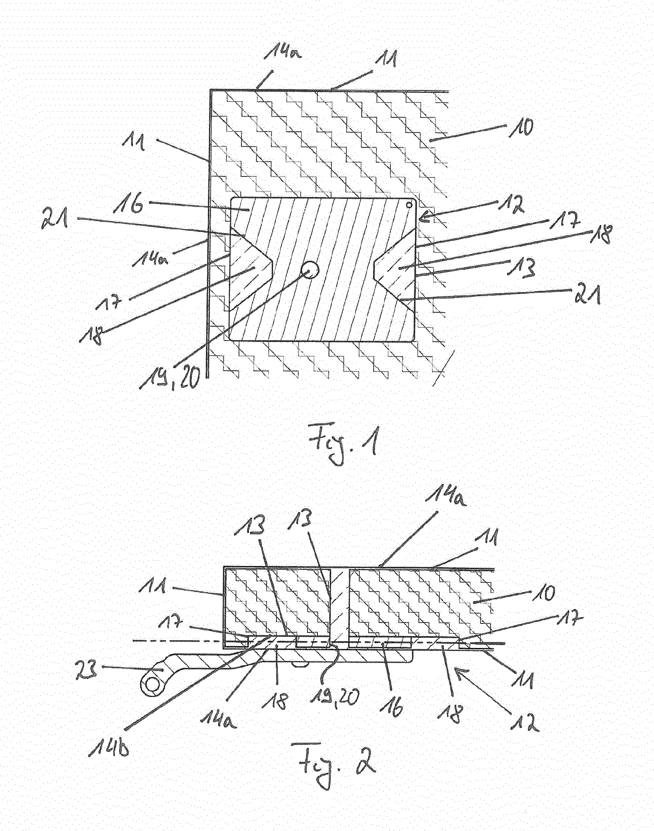

Die Isolierpaneele in den Fig. 1-10 zeichnen sich dadurch aus, dass die wärmedämmende Kernschicht 10 wenigstens eine Ausnehmung 13 aufweist. Die Ausnehmung 13 ist zumindest bereichsweise durch die Deckschicht 11 ausgefüllt, sodass die Deckschicht 11 im Bereich der Ausnehmung 13 eine erhöhte Schichtdicke aufweist.

Dadurch ergeben sich verschiedene Konstruktionsmöglichkeiten, da durch die verstärkte Deckschicht 11 Kräfte in das Isolierpaneel optimal eingeleitet und abgeleitet werden können. Beispielsweise ist eine stabile Montage von Einbauelementen und Anbauteilen möglich, wie Einlagen, Gewindehülsen, Gewinden usw. Im Bereich von Ankerschienen und Etagenschienen kann die Wandung des Fahrzeugaufbaus durch entsprechende gestaltete Isolierpaneele verstärkt werden. Die Seitenwände des Fahrzeugaufbaus können gezielt verstärkt werden, um den erhöhten Belastungen bei der Beladung, durch den Gabelstaplerbetrieb, durch Abrieb usw. besser entgegenwirken zu können.

Im Dachbereich sind längliche Verstärkungsbereiche der Isolierpaneele vorzugsweise quer zur Fahrtrichtung möglich, die zu Montage des Verdampfer bei Kühlfahrzeugen und zur Ableitung der Gewichtskräfte des Verdampfers in die Seitenwände genutzt werden können.

Bei dem Ausführungsbeispiel gemäß Fig. 1, 2 ist ein Einlageelement 16 als Bestandteil der Deckschicht 11 in die Kernschicht 10 integriert.

Bei dem Einlageelement 16 handelt es sich um ein plattenförmiges Bauteil, dessen Längsausdehnung größer als dessen Querausdehnung ist. Andere Formen sind möglich.

Das Einlegeelement 16 weist zwei gegenüber angeordnete, flache Seiten auf, die im montierten Zustand parallel zur den Hauptflächen des Isolierpaneels angeordnet sind. Eine der flachen Seite des Einlageelements 16 ist im Wesentlichen in einer der beiden Hauptflächen des Isolierpaneels angeordnet und von der Deckschicht 11 überdeckt. Eine andere Anordnung ist möglich. Die Erfindung ist nicht auf das in Fig. 1 gezeigte Einlageelement eingeschränkt. Generell ist es günstig, wenn das Einlageelement 16 wenigstens eine Außenfläche aufweist, die mit einer der Hauptflächen des Isolierpaneels flächenbündig angeordnet werden kann.

Zur Aufnahme des Einlageelements 16 weist die Kernschicht 10 eine Ausnehmung 13 auf, die eine Vertiefung in der Kernschicht 10 bildet. Die Form der Ausnehmung ist zumindest abschnittsweise an die Form des Einlageelements 16 angepasst.

Das Einlageelements 16 ist profiliert. Konkret ist zwischen dem Rand 17 der Ausnehmung 13 und dem Einlageelements 16 ein Spalt 18 ausgebildet. Bei dem Beispiel gemäß Fig. 1 erstreckt sich der Spalt 18 über eine Teillänge ziehungsweise einen Teilumfang des Einlageelements 16. Der Spalt 18 ist profiliert und weist im Beispiel gemäß Fig. 1 eine Trapezform auf. Dazu ist eine entsprechende randseitige Aussparung im Einlageelement 16 vorgesehen. Es versteht sich, dass die Erfindung nicht auf einen derartigen Spalt 18 eingeschränkt ist. Es ist auch möglich, dass der Spalt nicht profiliert ist, d. h. eine konstante Breite aufweist. Der Spalt kann beispielsweise auf dem gesamten Umfang des Einlageelements 16 ausgebildet sein. Der konstante Spalt 18 könnte auch auf einem Teilumfang ausgebildet sein.

Das Einlageelement 16 weist konkret auf zwei Seiten jeweils einen Spalt 18, insbesondere einen trapezförmigen Spalt 18 auf. Die Seiten des Einlageelements 16 können unterschiedlich profiliert sein.

Das Einlageelement 16 weist zusätzlich oder alternativ zu der randseitigen Aussparung zur Bildung des Spaltes 18 eine Aussparung 19 in der Form einer Durchgangsbohrung auf, die sich senkrecht zur Oberseite des Einlagepflegeelements 16 erstreckt. Es ist möglich, mehrere Aussparungen 19 in das Einlageelement 16 einzubringen. Die Geometrie der Aussparung 19 ist nicht beschränkt.

Wie in Fig. 1 gut zu erkennen, sind der Spalt 18 und die Aussparung 19 jeweils mit dem faserverstärkten Kunststoffmaterial der Deckschicht 11 ausgefüllt. Dies ist auch in Fig. 2 gut zu erkennen. Dadurch wird das Einlageelement 16 im Isolierpaneel verankert, konkret durch Einbettung des Einlageelements 16 in die Deckschicht 11. Wie in Fig. 2 zu erkennen, geht die Deckschicht 11 kontinuierlich vom Bereich der Ausnehmung 13 in die angrenzenden Bereiche über, sodass die ausgefüllten Bereiche der Ausnehmung 13 stoffschlüssig bzw. monolithisch mit den angrenzenden Bereichen der Deckschicht 11 um die Ausnehmung herum verbunden sind. Dadurch ergibt sich ein stabiler Verbund, in den Kräfte optimal eingeleitet und abgeleitet werden können.

Wie in Fig. 2 gut zu erkennen, bildet die Deckschicht 11 eine einheitliche Oberfläche aus und zwar sowohl im Bereich der Ausnehmung 13 als auch in den unmittelbar an die Ausnehmung 13 angrenzenden Bereiche. Dies wird dadurch erreicht, dass das auf die Kernschicht 10 aufgesprühte faserverstärkte Kunststoffmaterial durch die Presse glatt gepresst wird, sodass sich eine ebene Sichtfläche ergibt.

Beim Glattpressen wird zudem das faserverstärkte Kunststoffmaterial in den Spalt 18 bzw. generell in die Ausnehmung 13 gedrückt, sodass der Spalt 18 bzw. die Aussparung 19 optimal mit dem Material der Deckschicht 11 ausgefüllt werden.

Wie in Fig. 2 zu erkennen, wird das faserverstärkte Kunststoffmaterial durch die als Durchgangsöffnung 20 ausgebildete Aussparung 19 vollständig hindurchgedrückt, sodass die Deckschichten 11 auf beiden Seiten der Kernschicht 10 stoffschlüssig miteinander verbunden sind. Dadurch wird die Stabilität des Verbundes noch weiter erhöht.

Fig. 1 zeigt ferner, dass das Kernmaterial 10 im Bereich der Kantenflächen von der Deckschicht 11 umgeben ist. Dabei bildet die Deckschicht 11 eine Außenseite 14a, die im Bereich der Hauptflächen die Sichtfläche bildet. Die Innenseite 14b der Deckschicht 11 liegt entweder direkt oder indirekt an der Kernschicht 10 an und ist im Bereich der Ausnehmung 13 bzw. im Bereich der Ausnehmungen 13 nach innen profiliert, sodass sich im Bereich der Ausnehmung 13 eine erhöhte Schichtdicke ausbildet.

Wie in Fig. 2 gezeigt, ist das Einlageelement 16 mit einem Anbauteil 23 verbunden. Im Beispiel gemäß Fig. 2 ist das Anbauteil 23 bspw. das Scharnier einer Hecktüre eines Fahrzeugaufbaus, insbesondere Kühlfahrzeugaufbaus. Das Anbauteil 23 ist mit dem Einlageelement 16 fest verbunden, beispielsweise durch eine Nietverbindung oder Schraubverbindung oder stoffschlüssige Verbindung. Andere Anbauteile sind möglich.

Durch die Anordnung des Einlageelements 16 in der Ausnehmung 13 und die formschlüssige Fixierung des Einlageelements 16 in der Deckschicht 11 wird einerseits eine sehr flach bauende Anbindung des Anbauteils an das Isolierpaneel und andererseits eine mechanisch stabile Verbindung geschaffen. Das Ausführungsbeispiel gemäß Fig. 2 ermöglicht daher eine platzsparende und zugleich feste Anordnung von Anbauteilen an Isolierpaneelen.

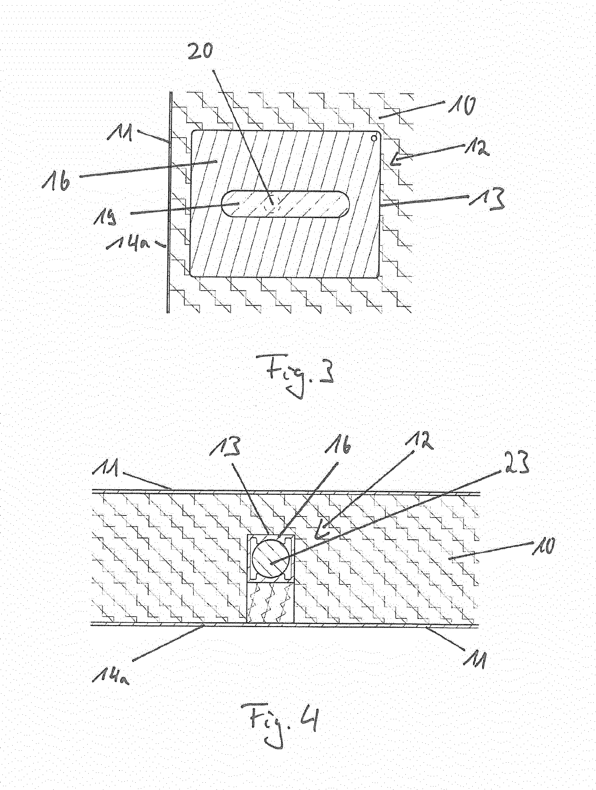

Eine Alternative zu dem Einlageelement 16 gemäß den Figuren 1, 2 ist in Fig. 3 gezeigt. Darin ist zu erkennen, dass die Aussparung 19 nutförmig ausgebildet und mit dem Material der Deckschicht 11 ausgefüllt ist. Die Aussparung 19 befindet sich im Bereich der Ausnehmung 13. Durch das in der Aussparung 19 befindliche Material der Deckschicht 11 wird ein formschlüssiger Verbund zwischen der Kernschicht 10, dem Einlageelement 16 und der Deckschicht 11 gebildet.

Eine weitere Verbesserung der Stabilität wird dadurch erreicht werden, dass die nutförmige Aussparung 19 mit einer Durchgangsöffnung 20 (strichlierte Darstellung) verbunden ist, sodass das in der Ausnehmung 19 angeordnete Kunststoffmaterial die Durchgangsöffnung 20 fließen kann, wenn der Verbund verpresst wird, sodass insgesamt die Stabilität des Isolierpaneels im Bereich des Einlageelements 16 verbessert wird.

In Fig. 4 ist ein Beispiel zeigt, wie flexibel das Verfahren bzw. das Isolierpaneel anwendbar sind. Bei dem Beispiel gemäß Fig. 4 ist in die Kernschicht 10 ein Einlageelement 16 zusammen mit einer Drehstange für den Türverschluss als Anbauteil 23 eingebettet. Dabei ist die Ausnehmung 13, in der die Drehstange angeordnet ist mit einem wärmedämmenden Material aufgefüllt, sodass die Deckschicht 11 in diesem Bereich einen konstante Schichtdicke aufweist. Die Einlageelemente 16 gemäß Fig. 1-3 können einfach mit dem Beispiel gemäß Fig. 4 kombiniert werden, bspw. zur Herstellung einer Hecktüre. Die Fixierung der Drehstange und die Einbettung des Einlageelements 16 gemäß Fig. 1-3 kann im selben Arbeitsschritt erfolgen. Außerdem ist es möglich, das wärmedämmende Element, das die Ausnehmung 13 auffüllt, durch die Deckschicht 11 mit der erhöhten Schichtdicke zumindest teilweise oder vollständig zu ersetzen, um im Bereich der Drehstange die Stabilität zu erhöhen.

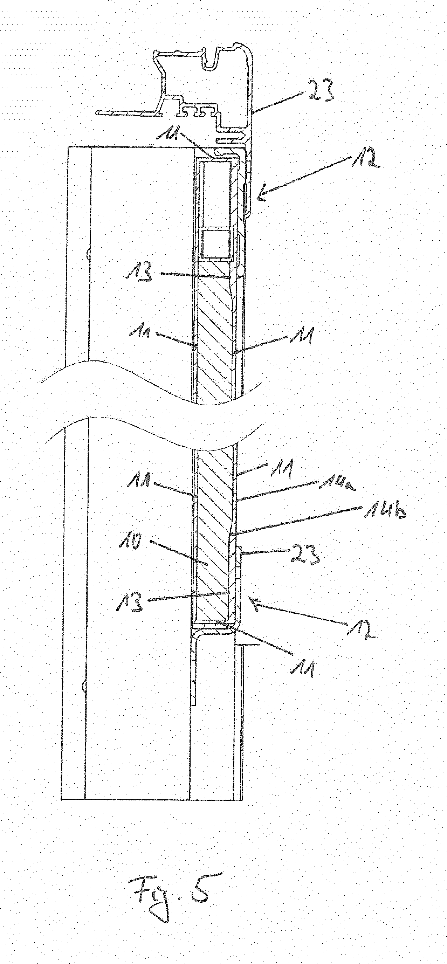

Fig. 5 zeigt ein Ausführungsbeispiel eines Isolierpaneels, das in eine Seitenwand eines Fahrzeugaufbaus integriert ist. Bei diesem Beispiel weist das Isolierpaneel lokal verstärkte Bereiche auf, die dazu verwendet werden, das Isolierpaneel mit Anbauteilen 23 zu verbinden. Diesem Beispiel sind die Funktionsbereiche 12 am unteren und am oberen Ende des Isolierpaneels ausgebildet und erstrecken sich entlang der Unterkante bzw. Oberkante des Isolierpaneels. Dabei sind die Ausnehmungen 13 vollständig mit dem faserverstärkten Kunststoffmaterial der Deckschicht 11 ausgefüllt und dienen dazu, das Isolierpaneel an den gewünschten Stellen mechanisch zu verstärken.

Wie in Fig. 5 anhand der unteren Ausnehmung 13 gezeigt, ist die Außenseite 14a der Deckschicht 11 eben und bildet eine glatte Sichtfläche sowohl im Bereich der Ausnehmung 13 als auch im angrenzenden Bereich des Isolierpaneels. Die Innenseite 14b der Deckschicht 11 ist im Bereich der Ausnehmung 13 nach innen bezogen auf das Isolierpaneel profiliert. Die Innenseite 14b erstreckt sich ins Innere des Isolierpaneels. Dies wird dadurch erreicht, dass die Ausnehmung 13 durch das Material der Deckschicht 11 bzw. durch die Deckschicht 11 vollständig ausgefüllt wird. Mit anderen Worten bestimmen die Form und Tiefe der Ausnehmung 13 die Innenprofilierung der Deckschicht 11. Im Bereich der Ausnehmung 13 weist die Deckschicht 11 somit eine erhöhte Schichtdicke im Vergleich zu den angrenzenden Bereichen der Deckschicht 11 auf.

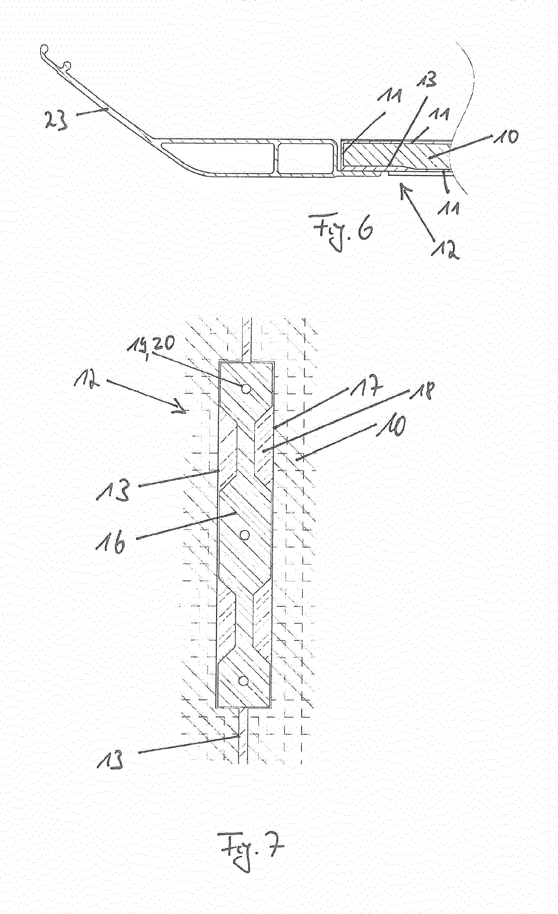

Ein weiteres Beispiel für ein erfindungsgemäßes Isolierpaneel ist in Fig. 6 gezeigt, das ähnlich wie in Fig. 5 im Bereich der Ecken des Isolierpaneels eine Verstärkung aufweist. Dazu ist eine entsprechende Ausnehmung 13 in der Kernschicht 10 ausgebildet, die vollständig mit dem faserverstärkten Kunststoffmaterial der Deckschicht 11 aufgefüllt ist. Das mechanisch verstärkte Isolierpaneel ist mit einem Anbauteil 23, beispielsweise einer Eckrunge verbunden.

Ein weiteres Beispiel für ein Einlageelement 16 ist in Fig. 7 gezeigt. Der in Fig. 7 gezeigte Schnitt verläuft parallel zur Deckschicht 11 der Hauptfläche (s.a. Fig. 1, 3). Das Einlageelement 16 weist eine mehrfach konturierte Form auf und bildet einen umlaufenden Spalt 18 zwischen dem Rand 17 der Ausnehmung 13 und dem Einlageelement 16. Der Spalt 18 ist profiliert und weist mehrere Verbreiterungen auf, die jeweils mit dem faserverstärkten Kunststoffmaterial der Deckschicht 11 ausgefüllt sind. Die Verbreiterungen sind ähnlich wie im Beispiel gemäß Fig. 1 trapezförmig ausgebildet. Durch die Auffüllung des Spalt 18 mit dem faserverstärkten Kunststoffmaterial wird das Einlageelement 16 fest in die Deckschicht 11 eingebettet. Zur weiteren Stabilisierung des in Fig. 7 gezeigten Verbundes sind zusätzliche Ausnehmungen 13 in der Kernschicht 10 ausgebildet, die nutförmig mit dem Spalt 18 verbunden sind. Die nutförmigen Ausnehmungen 13 sind ebenfalls mit dem faserverstärkten Kunststoffmaterial der Deckschicht 11 ausgefüllt und stabilisieren die Umgebung des Einlageelements 16.

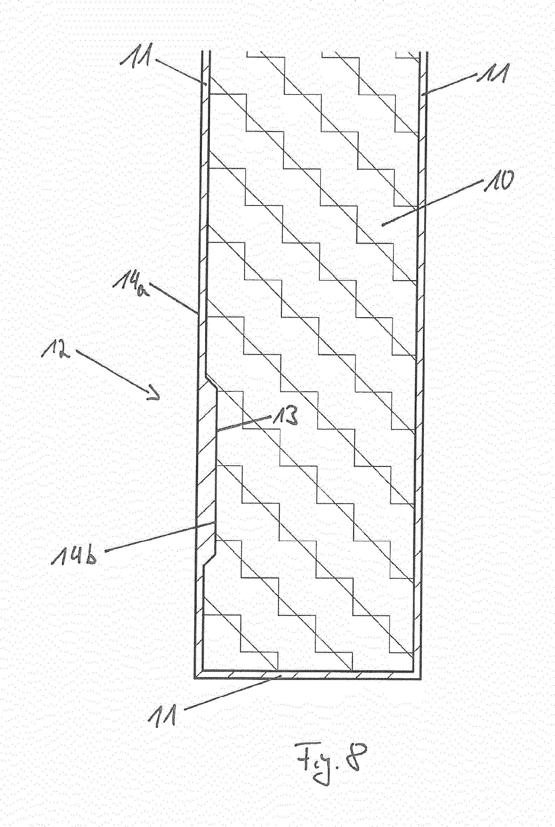

Ein Beispiel für einen Funktionsbereich 12 mit einer Ausnehmung 13, die vollständig mit dem faserverstärkten Kunststoffmaterial der Deckschicht 11 ausgefüllt ist, ist in Fig. 8 gezeigt. Darin ist besonders gut die Kontur der Deckschicht 11 zu sehen, die im Bereich der Ausnehmung 13 eine erhöhte Schichtdicke und im Bereich angrenzend an die Ausnehmung 13 einer geringere Schichtdicke aufweist. Außerdem ist gut zu sehen, dass das Kunststoffmaterial im Bereich der Ausnehmung 13 kontinuierlich bzw. monolithisch in die angrenzenden Bereiche der Deckschicht 11 übergeht. Die Außenseite 14a ist sowohl im Bereich der Ausnehmung 13 als auch im angrenzenden Bereich der Deckschicht 11 durchgängig glatt.

Auf der Innenseite 14b der Deckschicht 11 ist die Innenprofilierung der Deckschicht 11 gezeigt, die der Profilierung bzw. Kontur der Ausnehmung 13 entspricht. Beim Ausfüllen der Ausnehmung 13 mit dem faserverstärkten Kunststoffmaterial wird durch eine entsprechende Steuerung der Verfahrensparameter, beispielsweise die Geschwindigkeit des Mehrkomponenten-Sprühkopf eine erhöhte Materialmenge bereitgestellt, die so bemessen ist, dass die Ausnehmung 13 ausgefüllt ist. Durch das Verpressen des faserverstärkten Kunststoffmaterials mit der Kernschicht 10 wird sichergestellt, dass einerseits das Kunststoffmaterial die Ausnehmung 13 vollständig ausfüllt bzw. die Bereiche der Ausnehmung 13 ausfüllt, in denen dies gewünscht ist. Andererseits wird dadurch die glatte Außenseite 14a gebildet, die der Oberfläche der Form der Presse entspricht.

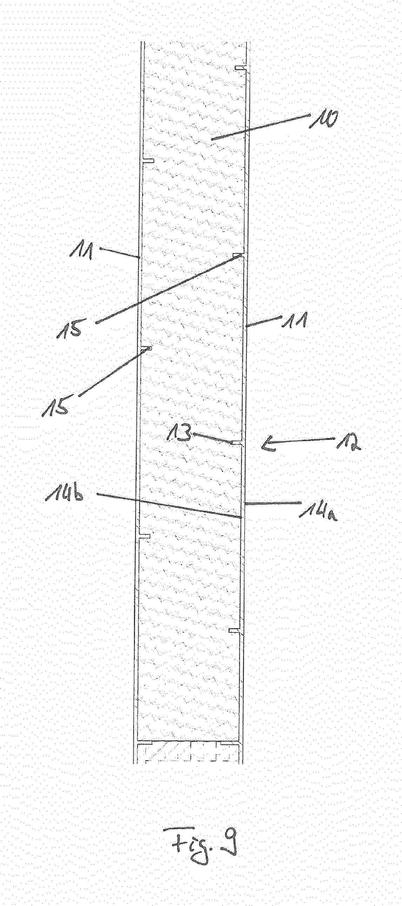

Fig. 9 zeigt ein Ausführungsbeispiel, bei dem sich nutförmige Ausnehmungen 13 senkrecht zur Deckschicht 11 erstrecken. Die Ausnehmungen 13 sind mit dem faserverstärkten Kunststoffmaterial der Deckschicht 11 ausgefüllt und bilden Rippen, die eine lokale Verstärkung des Isolierpaneels bewirken. Außerdem tragen die Rippen dazu bei, dass die Deckschicht 11 mit der Kernschicht 10 gut verankert wird.

In Fig. 9 ist ferner ersichtlich, dass die Kernschicht 10 aus mehreren Elementen zusammengesetzt ist, die einheitlich von der Deckschicht 11 überdeckt sind. Die Deckschicht 11 trägt also dazu bei, dass die Elemente der Kernschicht 10 fixiert werden.

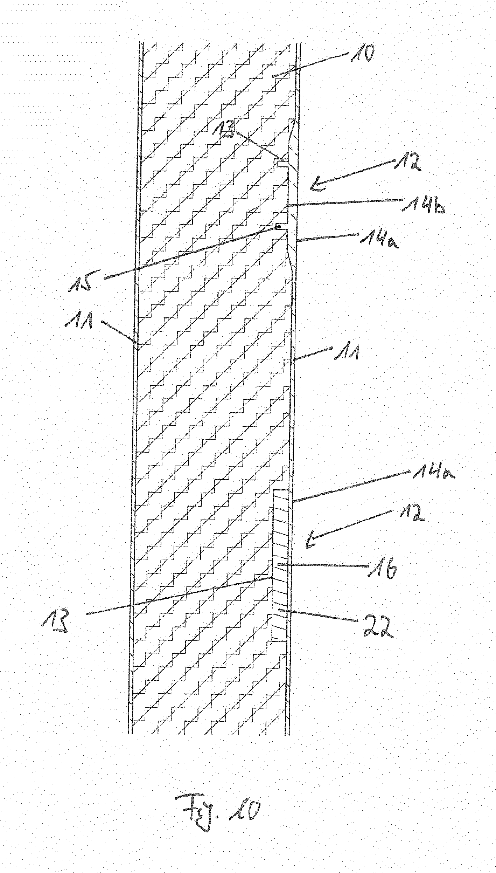

Ein weiteres Beispiel für ein erfindungsgemäßes Isolierpaneel ist in Fig. 10 gezeigt. Auch hier sind profilierte Ausnehmungen 13 in der Kernschicht 10 ausgebildet, die entweder mit einem Einlageelement 16 (untere Darstellung) oder vollständig mit dem faserverstärkten Kunststoffmaterial der Deckschicht 11 ausgefüllt sind.

Das Einlageelement 16 kann die Ausnehmung 13 vollständig ausfüllen oder, wie im Rahmen der Erfindung beschrieben, in der Ausnehmung 13 durch das Material der Deckschicht 11 fixiert sein. Bei dem Ausführungsbeispiel gemäß Fig. 10 ist das Einlageelement 16 mit einer weiteren Ausnehmung 13 kombiniert, die vollständig mit dem Material der Deckschicht 11 ausgefüllt ist. Die weitere Ausnehmung 13 weist zur Stabilisierung des Isolierpaneels am Grund der Ausnehmung 13 nutförmige Verstärkungsrippen 15 auf, die sich senkrecht zur Deckschicht 11 erstrecken. Die Ausnehmung 13 ist dazu entsprechend profiliert und vollständig mit dem Material der Deckschicht 11 ausgefüllt.

Die vorstehend genannten Möglichkeiten, die Ausnehmung auszubilden, diese mit verschiedenen Einlageelement oder Anbauteilen zu kombinieren oder diese vollständig mit dem Material der Deckschicht auszufüllen, können nach Bedarf miteinander kombiniert werden.

### Bezugszeichenliste

- 10: Kernschicht
- 11: Deckschicht
- 12: Funktionsbereich
- 13: Ausnehmung
- 14a: Außenseite der Deckschicht
- 14b: Innenseite der Deckschicht
- 15: Verstärkungsrippe
- 16: Einlageelement
- 17: Rand der Ausnehmung
- 18: Spalt
- 19: Aussparung
- 20: Durchgangsöffnung
- 21: Absatz
- 22: Verstärkungsplatte
- 23: Anbauteil

## Patentansprüche

1. Isolierpaneel für einen Fahrzeugaufbau, insbesondere Kühlfahrzeugaufbau, mit wenigstens einer wärmedämmenden Kernschicht (10) und wenigstens einer Deckschicht (11) aus einem faserverstärkten Kunststoffmaterial, **dadurch gekennzeichnet, dass**
die Kernschicht (10) wenigstens eine Ausnehmung (13) aufweist, die zumindest bereichsweise durch die Deckschicht (11) ausgefüllt ist, so dass die Deckschicht (11) im Bereich der Ausnehmung (13) eine erhöhte Schichtdicke aufweist.

2. Isolierpaneel nach Anspruch 1,
**dadurch gekennzeichnet, dass**
die Deckschicht (11) eine Außenseite (14a) aufweist, die zumindest im Bereich der Ausnehmung (13) eben bzw. glatt ausgebildet ist.

3. Isolierpaneel nach Anspruch 1 oder 2,
**dadurch gekennzeichnet, dass**
die Deckschicht (11) außerhalb der Ausnehmung (13) zumindest abschnittsweise eine einheitliche Schichtdicke aufweist.

4. Isolierpaneel nach einem der vorhergehenden Ansprüche,
**dadurch gekennzeichnet, dass**
die Ausnehmung (13) nutartig ausgebildet ist und die Deckschicht (11) wenigstens eine Verstärkungsrippe (15) bildet, die in die nutartige Ausnehmung (13) der Kernschicht (10) formschlüssig eingreift.

5. Isolierpaneel nach einem der vorhergehenden Ansprüche,
**dadurch gekennzeichnet, dass**
in der Ausnehmung (13) wenigstens ein Einlageelement (16) angeordnet ist.

6. Isolierpaneel nach Anspruch 5,
**dadurch gekennzeichnet, dass**
zwischen dem Einlageelement (16) und einem Rand (17) der Ausnehmung (13) ein Spalt (18) ausgebildet ist, der mit dem Kunststoffmaterial der Deckschicht (11) ausgefüllt ist, wobei das Kunststoffmaterial der Deckschicht (11) im Spalt (18) mit der Deckschicht (11) stoffschlüssig verbunden ist.

7. Isolierpaneel nach Anspruch 5 oder 6,
**dadurch gekennzeichnet, dass**
das Einlageelement (16) wenigstens eine Aussparung (19) aufweist, die mit dem Kunststoffmaterial der Deckschicht (11) ausgefüllt ist, wobei das Kunststoffmaterial der Deckschicht (11) in der Aussparung (19) mit der Deckschicht (11) stoffschlüssig derart verbunden ist, dass die Deckschicht (11) das Einlageelement (16) formschlüssig fixiert.

8. Isolierpaneel nach Anspruch 7,
**dadurch gekennzeichnet, dass**
die Aussparung (19) durch eine Durchgangsöffnung (20) im Einlageelement (16) und/oder durch einen randseitigen Absatz (21) am Einlageelement (16) gebildet ist.

9. Komponente eines Fahrzeugaufbaus, insbesondere Kühlfahrzeugaufbaus, umfassend eine Hecktüre und/oder eine Seitenwand und/oder eine Vorderwand und/oder eine Decke und/oder ein Boden jeweils mit wenigstens einem Isolierpaneel nach Anspruch 1.

10. Fahrzeugaufbau, insbesondere Kühlfahrzeugaufbau mit wenigstens einem Isolierpaneel nach Anspruch 1.

11. Fahrzeug, insbesondere Kühlfahrzeug mit wenigstens einem Isolierpaneel nach Anspruch 1.

12. Verfahren zur Herstellung eines Isolierpaneels nach einem der vorhergehenden Ansprüche, mit den folgenden Schritten:
- Bereitstellen einer Kernschicht (10) aus wenigstens einem wärmedämmenden, insbesondere geschäumten, Material, wobei die Kernschicht (10) wenigstens eine Ausnehmung (13) aufweist;
- Besprühen der Kernschicht (10) und der Ausnehmung (13) mit einem faserverstärkten, insbesondere glasfaserverstärkten, Kunststoffmaterial zur Bildung einer Deckschicht (11);
- Pressen der Kernschicht (10) mit der Deckschicht (11) zum Ausfüllen der Ausnehmung (13) mit dem faserverstärkten Kunststoffmaterial und Bildung einer ebenen bzw. glatten Außenseite (14a) der Deckschicht (11).

13. Verfahren nach Anspruch 12,
**dadurch gekennzeichnet, dass**
vor dem Besprühen der Kernschicht (10) wenigstens ein Einlageelement (16) in die Ausnehmung (13) eingelegt wird, das wenigstens eine Aussparung (19) aufweist, wobei beim Pressen der Kernschicht (10) mit der Deckschicht (11) das faserverstärkte Kunststoffmaterial die Aussparung (19) ausfüllt.

## Claims

1. An insulating panel for a vehicle body, in particular a refrigerated vehicle body, having at least one thermally insulating core layer (10) and at least one cover layer (11) consisting of a fibre-reinforced plastic material,
**characterised in that**
the core layer (10) has at least one recess (13), which is filled at least in some areas by the cover layer (11) so that the cover layer (11) has an increased layer thickness in the area of the recess (13).

2. The insulating panel according to Claim 1,
**characterised in that**
the cover layer (11) has an outer face (14a) which is flat or smooth at least in the area of the recess (13).

3. The insulating panel according to Claim 1 or 2,
**characterised in that**
the cover layer (11) has a uniform layer thickness at least in some sections outside the recess (13).

4. The insulating panel according to one of the preceding claims,
**characterised in that**
the recess (13) is groove-like, and the cover layer (11) forms at least one reinforcement rib (15), which engages form-fittingly in the groove-like recess (13) in the core layer (10).

5. The insulating panel according to one of the preceding claims,
**characterised in that**
at least one inlay element (16) is arranged in the recess (13).

6. The insulating panel according to Claim 5,
**characterised in that**
a gap (18) is formed between the inlay element (16) and an edge (17) of the recess (13), which gap is filled with the plastic material of the cover layer (11), wherein the plastic material of the cover layer (11) in the gap (18) is integrally bonded to the cover layer (11).

7. The insulating panel according to Claim 5 or 6,
**characterised in that**
the inlay element (16) has at least one cut-out (19), which is filled with the plastic material of the cover layer (11), wherein the plastic material of the cover layer (11) in the cut-out (19) is integrally bonded to the cover layer (11) such that the cover layer (11) fixes the inlay element (16) in a form-fitting manner.

8. The insulating panel according to Claim 7,
**characterised in that**
the cut-out (19) is formed by a through-opening (20) in the inlay element (16) and/or by an edge step (21) on the inlay element (16).

9. A component of a vehicle body, in particular a refrigerated vehicle body, comprising a rear door and/or a side wall and/or a front wall and/or a ceiling and/or a floor each having at least one insulating panel according to Claim 1.

10. A vehicle body, in particular a refrigerated vehicle body, having at least one insulating panel according to Claim 1.

11. A vehicle, in particular a refrigerated vehicle, having at least one insulating panel according to Claim 1.

12. A method for producing an insulating panel according to one of the preceding claims, comprising the following steps:
- providing a core layer (10) of at least one thermally insulating, in particular foamed, material, wherein the core layer (10) has at least one recess (13);
- spraying the core layer (10) and the recess (13) with a fibre-reinforced, in particular glass-fibre-reinforced, plastic material to form a cover layer (11);
- pressing the core layer (10) together with the cover layer (11) to fill the recess (13) with the fibre-reinforced plastic material and to form a flat or smooth outer face (14a) of the cover layer (11).

13. The method according to Claim 12,
**characterised in that**
at least one inlay element (16), which has at least one cut-out (19), is laid into the recess (13) before the core layer (10) is sprayed, wherein the fibre-reinforced plastic material fills the cut-out (19) when the core layer (10) is pressed with the cover layer (11).

## Revendications

1. Panneau isolant pour une carrosserie de véhicule, notamment pour une carrosserie de véhicule frigorifique, pourvu d'au moins une couche centrale (10) calorifuge et d'au moins une couche de recouvrement (11) en une matière plastique renforcée par fibres,
**caractérisé en ce que**
la couche centrale (10) comporte au moins un évidement (13), qui est rempli au moins par endroits par la couche de recouvrement (11), de telle sorte que la couche de recouvrement (11) présente dans la zone de l'évidement (13) une épaisseur de couche augmentée.

2. Panneau isolant selon la revendication 1,
**caractérisé en ce que**
la couche de recouvrement (11) comporte une face extérieure (14a), qui au moins dans la zone de l'évidement (13) est conçue en étant plane ou lisse.

3. Panneau isolant selon la revendication 1 ou 2,
**caractérisé en ce que**
la couche de recouvrement (11) présente hors de la zone de l'évidement (13) au moins par sections une épaisseur de couche uniforme.

4. Panneau isolant selon l'une quelconque des revendications précédentes,
**caractérisé en ce que**
l'évidement (13) est conçu sous la forme d'une rainure et **en ce que** la couche de recouvrement (11) constitue au moins une nervure de renfort (15), qui s'engage par complémentarité de forme dans l'évidement (13) en forme de rainure de la couche centrale (10).

5. Panneau isolant selon l'une quelconque des revendications précédentes,
**caractérisé en ce que**
dans l'évidement (13) est placé au moins un élément d'insert (16).

6. Panneau isolant selon la revendication 5,
**caractérisé en ce**
**qu'**entre l'élément d'insert (16) et un bord (17) de l'évidement (13) est conçue une fente (18) qui est remplie avec la matière plastique de la couche de recouvrement (11), dans la fente (18), la matière plastique de la couche de recouvrement (11) étant assemblée par conjugaison de matières avec la couche de recouvrement (11).

7. Panneau isolant selon la revendication 5 ou 6,
**caractérisé en ce que**
l'élément d'insert (16) comporte au moins une encoche (19) qui est remplie avec la matière plastique de la couche de recouvrement (11), dans l'encoche (19), la matière plastique de la couche de recouvrement (11) étant assemblée par conjugaison de matières avec la couche de recouvrement (11) de telle sorte que la couche de recouvrement (11) fixe l'élément d'insert (16) par complémentarité de forme.

8. Panneau isolant selon la revendication 7,
**caractérisé en ce que**
l'encoche (19) est constituée par une ouverture de passage (20) dans l'élément d'insert (16) et / ou par un talon (21) sur le côté bord de l'élément d'insert (16).

9. Composant d'une carrosserie de véhicule, notamment d'une carrosserie de véhicule frigorifique, comprenant une porte arrière et / ou une paroi latérale et / ou une paroi avant et / ou un plafond et / ou un fond inférieur, chacun pourvu d'au moins un panneau isolant selon la revendication 1.

10. Carrosserie de véhicule, notamment carrosserie de véhicule frigorifique, pourvue d'au moins un panneau isolant selon la revendication 1.

11. Véhicule, notamment véhicule frigorifique, pourvu d'au moins un panneau isolant selon la revendication 1.

12. Procédé, destiné à fabriquer un panneau isolant selon l'une quelconque des revendications précédentes, comportant les étapes suivantes, consistant à :
- mettre à disposition une couche centrale (10) en au moins une matière calorifuge, notamment expansée, la couche centrale (10) comportant au moins un évidement (13) ;
- pulvériser sur la couche centrale (10) et l'évidement (13) une matière plastique renforcée par fibres, notamment renforcée par fibres de verre, pour créer une couche de recouvrement (11) ;
- compresser la couche centrale (10) avec la couche de recouvrement (11) pour remplir l'évidement (13) avec la matière plastique renforcée par fibres et créer une face extérieure (14a) plane ou lisse de la couche de recouvrement (11).

13. Procédé selon la revendication 12,
**caractérisé en ce**
**qu'**avant de pulvériser sur la couche centrale (10), l'on insère dans l'évidement (13) au moins un élément d'insert (16), qui comporte au moins une encoche (19), lors de la compression de la couche centrale (10) avec la couche de recouvrement (11), la matière plastique renforcée par fibres remplissant l'encoche (19).
